# EUROPÄISCHE PATENTSCHRIFT

(11) **EP 2 674 523 B1**
(45) Veröffentlichungstag und Bekanntmachung des Hinweises auf die Patenterteilung: **18.05.2016**
(21) Anmeldenummer: 13171816.5
(22) Anmeldetag: 13.06.2013
(51) Int. Cl.: A47L 15/44, C11D 17/04, C11D 3/48, C11D 3/12, C11D 11/00, D06F 39/02, A01N 59/16

(54) **Mikrobizider Speicher**
Microbicidal storage
Réservoir microbicide

(30) Priorität: 14.06.2012 DE 102012210051
(43) Veröffentlichungstag der Anmeldung: 18.12.2013
(73) Patentinhaber: Lauke, Christian, 47807 Krefeld (DE)
(72) Erfinder: Lauke, Christian, 47807 Krefeld (DE)
(74) Vertreter: von Kreisler Selting Werner - Partnerschaft von Patentanwälten und Rechtsanwälten mbB

(56) Entgegenhaltungen:
- EP-A1- 0 610 535
- DE-A1-102007 012 972
- DE-C1- 3 844 368
- DE-U1-202010 014 723
- GB-A- 2 244 722
- JP-A- 2011 156 243

## Beschreibung

Die Erfindung betrifft einen bei der Hand-und Maschinenwäsche Silberionen abgebenden mikrobiziden Speicher, der mit Silber beschichtete Fasern und/oder mit Silber beschichtete Fäden in einem Formkörper umfasst.

Es ist bekannt, dass Schwermetallionen, wie beispielsweise Silber-, Quecksilber-, Kupfer-, Zink- und Zirkoniumionen auf Mikroorganismen wie Bakterien, Viren, Pilze und Sporen abtötend oder wachstumshemmend wirken. Für eine bakterizide Wirkung sind Silberionen von besonderem Interesse. Der entscheidende Vorteil von Silberionen gegenüber anderen bakterizid wirkenden Metallionen ist die weitestgehende Unempfindlichkeit des menschlichen Metabolismus gegenüber Silber. Die bakterizid wirkende Konzentration wird bei Silber mit 0,01 bis1 mg/L angegeben.

Diese Wirkung der Silberionen wird seit langem in unterschiedlichen Anwendungen genutzt. Für den Einsatz in Waschmaschinen werden unterschiedliche Silberdotierungen beschrieben. In der JP 2005261830 A wird ein elektrischer Silberionengenerator beschrieben, um das Waschwasser mit Silberionen anzureichern. Der Einsatz von Nano-Silber ist beispielsweise in der KR 10 2005 114 811 A, der KR 10 2004 093 956 A, der KR 10 2004 093 958 A und der KR 10 2004 086 672 A beschrieben. Hierbei wird durch die geringe Größe von Nano-Partikeln die wirksame Oberfläche vergrößert.

Darüber hinaus sind beispielsweise aus der DE 101 40 772 A silberhaltige Fasern bekannt, die zu textilen Produkten verarbeitet werden können, welche antibakterielle und oder fungizide Eigenschaften haben.

Schließlich ist aus der DE 10 2006 056 977 B3 die Verwendung eines textilen mikrobiziden Speichers im Inneren einer Waschmaschine oder eines Geschirrspülers bekannt, um eine bakterizide Wirkung auf den zu reinigenden Gegenständen und Materialien zu erzielen. Der Speicher wird aus Fasern gebildet, die aus einem festen Verbund von mit Silberionen beladenen Ionenaustauscherpartikeln mit einer Zellulosematrix bestehen. Von Nachteil bei dem bekannten mikrobiziden Speicher ist jedoch, dass die bakterizide Wirkung des Speichers bereits nach wenigen Waschvorgängen stark abnimmt. Dies ist darauf zurückzuführen, dass die Silberionen schnell aus den Ionenaustauscherpartikeln des bekannten Speichers ausgewaschen werden.

JP 2011 156 243 A beschreibt den Einsatz eines antibakteriell wirkenden Reinigungsmittels, das während des Waschvorgangs fein vermahlen wird und sich in der Waschlauge verteilt, wodurch die deodorisierende Wirkung erzielt wird. Als Material wird hier ein calcinierter Zeolith in einem wasserdurchlässigen Beutel eingesetzt. Antibakteriell wirkendes Silber wird auf einem Zeolithträger aufgebracht.

Aus DE 10 2007 012 972 A1 ist eine Vorrichtung zur bioziden Behandlung von Wäsche bekannt. Die Vorrichtung zur bioziden Behandlung von Wäsche in einer Waschmaschine besteht aus einem Hohlkörper, in dem eine biozie Substanz eingeschlossen ist und dessen Schale Öffnungen für den Durchtritt der Wasch- und Spülflotten hat. Die biozide Substanz ist so ausgewählt, dass sie für den menschlichen Metabolismus zumindest weitestgehend unschädlich und in der gewaschenen Wäsche über den Waschvorgang hinaus für eine gewisse Zeit wirksam ist. Beispielsweise kann im Inneren einer Hohlkugel ein würfelförmiger Trägerkörper eingeschlossen sein, der die biozide Substanz enthält. Dabei kann der Trägerkörper zum Beispiel ein Fasergebilde in Form eines Vlieses oder eines mehrlagigen Gewirks oder Gewebes sein, das mit der bioziden Substanz dotiert ist.

Ein entsprechender Trägerkörper kann jedoch die notwendigen Silberionen nur relativ langsam abgeben, wenn das Fasergebilde mit der bioziden Substanz dotiert ist.

EP 1 881 058 A2 beschreibt ein selbstdesinfizierendes Reinigungstuch aus zellulosischen Fasern als Grundmaterial und modifizierten Lyocelfasern, die mindestens ein mit sauren Gruppen modifiziertes Polymer enthalten, und mit bakterizid wirkenden Metallionen beladen sind.

DE 20 2010 014 723 U1 betrifft einen textilen mikrobiziden Speicher, der zur Abgabe von Silberionen bei der Hand-oder Maschinenwäsche ausgebildet ist und mit Silber beschichtete Fasern und/oder mit Silber beschichtete Fäden in einem textilen Verbund aufweist. Bei dem textilen Verbund kann es sich um ein textiles Flächengebilde, beispielsweise ein Gestrick, ein Vlies, ein Gewirk oder ein textiles Gewebe handeln. Der Begriff "Faser" im Sinne dieses Dokuments und der vorliegenden Erfindung umfasst Monofilamente und Multifilamente und betrifft grundsätzlich ein im Verhältnis zur Länge dünnes und flexibles Gebilde. Die Herstellung des textilen Flächenerzeugnisses ist aufwändig. Das Tuch ist für einen Einsatz in einer Geschirrspülmaschine wenig geeignet.

Aufgabe der vorliegenden Erfindung ist es, einen mikrobiziden Speicher der eingangs genannten Art zur Verfügung zu stellen, der das Ausrüsten von zu reinigenden Gegenständen oder Materialien mit Silberionen und oder das Desinfizieren von Gegenständen oder Materialien, beispielsweise Textilien mittels Silberionen und oder das Erzielen einer bakteriziden Wirkung auf den Gegenständen oder Materialien mittels Silberionen über einen längeren Zeitraum und bei hoher bis höchster Wirksamkeit ermöglicht.

Die vorliegende Aufgabe wird in einer ersten Ausführungsform gelöst durch einen mikrobiziden Speichers gemäß dem unabhängigen Anspruch 1.

Der Begriff der Hand-und Maschinenwäsche im Sinne der vorliegenden Erfindung umfasst das Waschen von Textilien sowie die das Reinigen von Geschirr, insbesondere Haushaltsgeschirr einschließlich medizinischen Geräten. Mit Hilfe der vorliegenden Erfindung ist es möglich, mikrobiziden Speicher zur Verfügung zu stellen, der insbesondere wenigstens 100 bis wenigstens 150 Haushaltswäschen bzw. Geschirrreinigungen übersteht, und danach immer noch eine gewisse zufriedenstellende Tauglichkeit aufweist.

Die Art des Hohlraums des dreidimensionalen wasserdurchlässigen Formkörpers ist von weniger Bedeutung. Voraussetzung für den Erfolg der vorliegenden Erfindung ist jedoch, dass die Fasern und/oder Fäden den Hohlraum während des bestimmungsgemäßen Gebrauchs nicht verlassen können. Die Fasern und/oder Fäden können beispielsweise auch auf einem Trägerkörper befestigt sein. Dadurch wird die Gefahr des Austretens der Fasern und/oder Fäden aus dem Formkörper vermindert. Weitere Voraussetzung für die mikrobiziden Wirkung ist dennoch die Wasserdurchlässigkeit des Formkörpers, damit die Fasern und/oder Fäden mit der Waschlauge umspült werden. Dies gewährleistet eine mehr oder weniger kontinuierliche Abgabe von Silberionen während der Wäsche bzw. der Reinigung.

Eine besonders bevorzugte Ausführungsform der vorliegenden Erfindung umfasst Formkörper, die oberseitig und unterseitig aus Flächenerzeugnissen bestehen, bzw. diese umfassen. Besonders bevorzugt im Sinne der vorliegenden Erfindung sind diese Flächenerzeugnissen ausgewählt aus einem randumlaufend verschlossenen perforierten Folienbeutel, Filternetz, Filterbeutel, Filtersieb, Vliesbeutel, Schwammkörper, Gestrick, Gewirk oder Gewebe, einschließlich deren Mischformen. Ein randumlaufend verschlossener Folienbeutel wird beispielsweise durch die Perforierung wasserdurchlässig und kann damit im Sinne der vorliegenden Erfindung wirksam sein. Erfindungsgemäß einsetzbare Filternetze, Filterbeutel oder Filtersiebe aus Kunststoff oder Metall sind beispielsweise für das Aufbrühen von Kaffee oder Tee bekannt. Ein Schwammkörper, der im Sinne der vorliegenden Erfindung eingesetzt wird, bedarf der Offenporigkeit, damit dieser wasserdurchlässig ist. Alternativ zu den Flächenerzeugnissen, ist es im Sinne der vorliegenden Erfindung gleichermaßen bevorzugt, wenn der Formkörper eine mehr dreidimensionale Ausrichtung aufweist. Im Sinne der vorliegenden Erfindung ist der Formkörper zylindrisch. Die mit Silber beschichteten Fasern und/oder mit silberbeschichteten Fäden sind dabei in einen verschlossenen Hohlraum angeordnet, wobei in jedem Falle die Wasserdurchlässigkeit des Formkörpers gewährleistet werden muss.

Ein wesentliches Element der Erfindung besteht darin, dass der die Fasern und/oder Fäden enthaltende Formkörper die Wasserdurchlässigkeit dergestalt gewährleistet, dass die Fasern und/oder die Fäden den Formkörper während der Anwendung nicht verlassen. Im Falle eines Siebs sollte daher die Maschenweite geringer sein, als der Durchmesser der Fasern und/oder Fäden. Alternativ und kumulativ ist es auch bei allen Formkörpern möglich, die Fasern und/oder die Fäden an diesen stoffschlüssig, kraftschlüssig oder formschlüssig zu binden.

Die erfindungsgemäß einzusetzenden mit silberbeschichteten Fasern und/oder mit silberbeschichteten Fäden können auch in ein wasserdurchlässiges Flächenerzeugnis eingewickelt werden. Wickelt man die Fasern und oder Fäden in ein rechteckiges Flächenerzeugnissen ein, so entsteht zunächst ein zylindrische Grundelement, das beispielsweise durch einen Deckel an der Ober- und Unterseite verschlossen werden kann. Alternativ ist es darüber hinaus selbst verständlich auch möglich, den Zylinder an seiner Ober- und Unterseite durch Quetschen und gegebenenfalls Verschweißen oder Vernähen zu verschließen. Geht man von einem kreisringförmigen Flächenerzeugnissen aus, und wickelt die Fasern und oder Fäden durch Aufrollen des Flächenerzeugnisses ein, so entsteht ein dreidimensionaler Formkörper in Form einer Kreisringspule, die die Fasern und/oder Fäden im Inneren sicher beherbergt. Gegebenenfalls ist es hier möglich, den freiliegenden Rand des Flächenerzeugnisses mit der freiliegenden Fläche zu verbinden, und so die Fasern und/oder Fäden sicher in dem Formkörper einzuschließen.

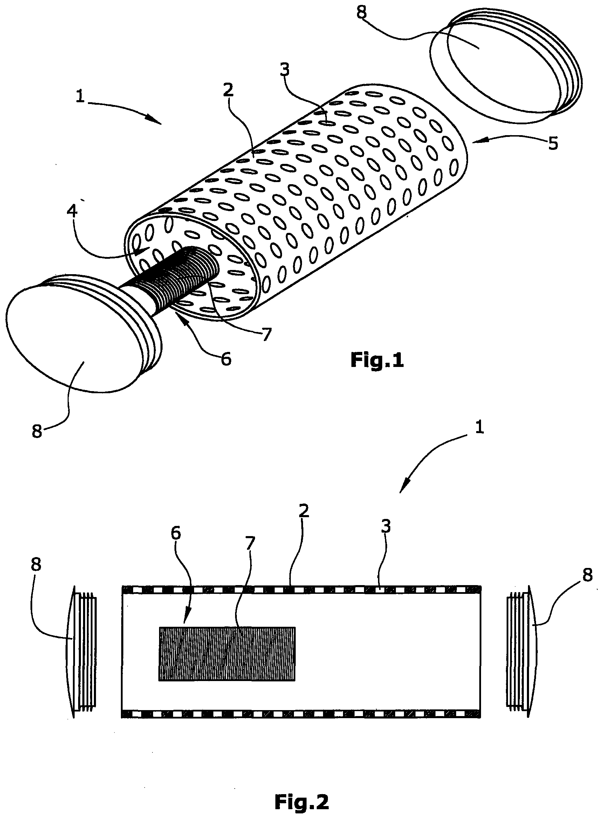

Eine besonders bevorzugte Ausführungsform der vorliegenden Erfindung ist in den Figuren 1 und 2 wiedergegeben.

Fig. 1 beinhaltet eine Detailansicht eines besonders bevorzugten mikrobiziden Speichers 1 gemäß der vorliegenden Erfindung.

In Fig. 2 wird eine Querschnittszeichnung des vorgenannten Speichers 1 dargestellt.

Der erfindungsgemäße mikrobizide Speicher 1 gemäß Fig. 1 besteht hier aus einem zylinderförmigen Formkörper 2 mit einer Vielzahl von Öffnungen, die die Wasserdurchlässigkeit des Formkörpers 2 gewährleisten.

Der Formkörper 2 kann an den beiden Stirnseiten des Zylinders mit jeweils Deckel 8 verschlossen werden, damit der die Silberionen enthaltenen Fasern 7 in dem Hohlraum 5 befindliche Spulenkörper 6 den Formkörper 2 während des Waschvorgangs nicht verlassen kann.

Besonders bevorzugt sind die Silberionen enthaltenen Fasern auf den inneren Spulenkörper 6 aufgewickelt, der gegebenenfalls analog zu dem umgebenden Formkörper 2 ebenfalls eine Wasserdurchlässigkeit durch entsprechende Öffnungen (nicht dargestellt) aufweisen sollte.

Somit ist der Spulenkörper 6 innerhalb des Hohlraums 5 des Formkörpers 2 frei beweglich.

Die Deckel 8 können in den Innenrand des Formkörpers 2 eingedrückt bzw. eingeklipst werden. Gegebenenfalls erlaubt diese Anordnung auch das Austauschen des Spulenkörpers 6, nachdem die biozide Wirkung des Speichers nachgelassen hat.

Ein silberhaltiger Faden im Sinne der Erfindung kann zwischen 10 bis 100, vorzugsweise zwischen 20 bis 50, insbesondere zwischen 30 bis 40, beispielsweise 34, mit Silber beschichtete Fasern aufweisen. Die hohe Anzahl von Fasern in einem silberhaltigen Faden führt zu einer Vergrößerung der mit Silber beschichteten wirksamen Oberfläche und damit zu einer hohen Wirksamkeit des Speichers 1 durch Abgabe von Silberionen.

Der Titer des silberhaltigen Fadens kann zwischen 50 bis100 dtex, vorzugsweise zwischen 70 bis 85 dtex, insbesondere zwischen 75 bis 80 dtex, beispielsweise 78 dtex, betragen.

Um eine ausreichend hohe Freisetzung von Silberionen in der Waschflotte oder auch dem Geschirrspüler sicherzustellen, kann der Silbergehalt des Verbundes zwischen 10 bis 1.000 g/m², vorzugsweise zwischen 20 bis 100 g/m², insbesondere zwischen 30 bis 60 g/m², jeweils bezogen auf den Formkörper 2, betragen.

Darüber hinaus lässt sich eine ausreichend hohe Wirksamkeit des erfindungsgemäßen Speichers 1 dadurch sicherstellen, dass die Länge des silberbeschichteten Fadens bezogen auf das Volumen des Formkörpers 500 bis 10.000 m/m³, vorzugsweise 1000 bis 5000 m/m³, insbesondere 2000 bis 3000 m/m ³, beträgt.

In einer bevorzugten Ausführungsform der vorliegenden Erfindung ist der Speicher 1 dadurch gekennzeichnet, dass die Länge der Fasern und/oder Fäden 10 m bis 1.000 m, insbesondere 100 m bis 500 m beträgt.

Durch Einsatz sehr feiner mit Silber beschichteter Fasern und/oder mit Silber beschichteten Fäden in dem erfindungsgemäßen Formkörper 2 kann damit die Silberoberfläche beispielsweise gegenüber einer Silberkugel gleicher Masse um ein Vielfaches, beispielsweise das ca. 250.000 Fache, vergrößert werden.

Bei den silberhaltigen Fäden kann es sich beispielsweise um das Produkt der Marke" X-static" ® der Noble Biomaterials, Inc., USA handeln, das in der WO 2006/121935 A2 beschrieben ist. Die Prüfung der Wirksamkeit erfolgt insbesondere nach der DIN EN ISO 20743A,Z: 2007 bis 10 "Textilien-Bestimmung der antibakteriellen Wirkung antibakteriell behandelte Erzeugnisse" -10.1 Absorptionsverfahren. Als Testkeime werden beispielsweise Staphylococcus aureus ATCC C6538 und Klebsiella pneumoniae ATCC 4352 betrachtet.

In einer besonderen Ausführungsform der vorliegenden Erfindung enthalten die mit Silber beschichteten Fasern und/oder mit Silber beschichteten Fäden Polyester, Polyamid, Polyurethan und/oder Polypropylen. Voraussetzung für die Auswahl des Materials der Fasern und/oder Fäden ist deren Waschbeständigkeit in der Anwendung.

Eine weitere Ausführungsform der Erfindung umfasst ein Verfahren zum Waschen von Textilien oder Reinigen von Geschirr, das dadurch gekennzeichnet ist, dass man einen oben definierten Speicher 1 einsetzt.

## Patentansprüche

1. Bei der Hand- und Maschinenwäsche Silberionen abgebender mikrobizider Speicher (1) umfassend mit Silber beschichtete Fasern und/oder mit Silber beschichtete Fäden, **dadurch gekennzeichnet, dass** der Speicher (1) einen dreidimensionalen zylindrischen wasserdurchlässigen Formkörper (2) umfasst, wobei die Fasern und/ oder Fäden mit einer Länge von 10 m bis 1000 m in einem Hohlraum (5) des Formkörpers (2) angeordnet sind und der Formkörper (2) im Inneren einen zylindrischen Trägerkörper (6) für die Fasern und/oder Fäden aufweist, wobei die Fasern und/oder Fäden auf die Mantelfläche des Trägerkörpers (6) aufgewickelt sind.

2. Speicher (1) nach Anspruch 1, **dadurch gekennzeichnet, dass** der Formkörper (2) oberseitig und unterseitig Flächenerzeugnisse umfasst, die ausgewählt sind aus einem randumlaufend verschlossenen perforierten Folienbeutel, Filternetz, Filterbeutel, Filtersieb, Vliesbeutel, Schwammkörper, Gestrick, Gewirk oder Gewebe, einschließlich deren Mischformen.

3. Speicher (1) nach Anspruch 1, **dadurch gekennzeichnet, dass** der Formkörper (2) an den Stirnseiten jeweils mit einem Deckel (8) verschlossen ist.

4. Speicher (1) nach einem der Ansprüche 1 bis 3, **dadurch gekennzeichnet, dass** die mit Silber beschichtete Fasern und/oder mit Silber beschichtete Fäden Polyester, Polyamid, Polyurethan und/oder Polypropylen enthalten.

5. Speicher (1) nach einem der Ansprüche 1 bis **4, dadurch gekennzeichnet, dass** der Silbergehalt mit Silber beschichtete Fasern und/oder mit Silber beschichtete Fäden 10 bis 20 Gew.%, insbesondere 12 bis 18 Gew.%, beispielsweise 15 Gew.%, bezogen auf die Fasern und/oder Fäden beträgt.

6. Speicher (1) nach einem der Ansprüche 1 bis **5, dadurch gekennzeichnet, dass** das enthaltene Silber eine Reinheit von wenigsten 99 Gew.%, insbesondere 99,5 Gew.%, beispielsweise elementares Silber umfasst.

7. Speicher (1) nach einem der Ansprüche 1 bis **6, dadurch gekennzeichnet, dass** die Länge der Fasern und/oder Fäden 100 m bis 500 m beträgt.

8. Verfahren zum Waschen von Textilien oder Reinigen von Geschirr, **dadurch gekennzeichnet, dass** man einen Speicher (1) nach einem der Ansprüche 1 bis **7** einsetzt.

## Claims

1. A microbicidal store (1) releasing silver ions during hand and machine washing, comprising silver-coated fibers and/or silver-coated threads, **characterized in that** said store (1) comprises a three-dimensional cylindrical water-permeable molded part (2), wherein said fibers and/or threads having a length of from 10 m to 1000 m are provided in a hollow space (5) of said molded part (2) and said molded part (2) has a cylindrical support body (6) for the fibers and/or threads inside, wherein said fibers and/or threads are wound up onto the lateral surface of said support body (6).

2. The store (1) according to claim 1, **characterized in that** said molded part (2) comprises sheet products on the top and bottom sides thereof that are selected from a circumferentially closed perforated film bag, filter net, filter bag, filter sieve, nonwoven bag, sponge body, knitting, knitted fabric or woven fabric including mixed forms thereof.

3. The store (1) according to claim 1, **characterized in that** said molded part (2) is closed with a lid (8) on each of its faces.

4. The store (1) according to any of claims 1 to 3, **characterized in that** said silver-coated fibers and/or silver-coated threads contain polyester, polyamide, polyurethane and/or polypropylene.

5. The store (1) according to any of claims 1 to 4, **characterized in that** the silver content of said silver-coated fibers and/or silver-coated threads is from 10 to 20% by weight, especially from 12 to 18% by weight, for example, 15% by weight, based on the fibers and/or threads.

6. The store (1) according to any of claims 1 to 5, **characterized in that** the silver contained has a purity of at least 99% by weight, especially 99.5% by weight, for example, elemental silver.

7. The store (1) according to any of claims 1 to 6, **characterized in that** the length of the fibers and/or threads is from 100 m to 500 m.

8. A process for washing textiles or cleaning dishes, **characterized in that** a store (1) according to any of claims 1 to 7 is employed.

## Revendications

1. Réservoir microbicide (1) dégageant des ions d'argent lors du lavage à la main et en machine, comprenant des fibres recouvertes d'argent et/ou des fils recouverts d'argent, **caractérisé en ce que** ledit réservoir (1) comprend une pièce moulée (2) perméable à l'eau, cylindrique, tridimensionnelle, dans lequel les fibres et/ou fils ayant une longueur de 10 m à 1000 m sont arrangés dans une cavité (5) de ladite pièce moulée (2), et ladite pièce moulée (2) présente dans son intérieur un corps de support cylindrique (6) pour les fibres et/ou les fils, dans lequel les fibres et/ou fils sont enroulés sur la surface d'enveloppe dudit corps de support (6).

2. Réservoir (1)'selon la revendication 1, **caractérisé en ce que** ladite pièce moulée (2) comprend sur les faces supérieure et inférieure des produits en feuille choisis parmi un sachet en feuille perforé et fermé circonférentiellement, un filet filtrant, un sachet filtrant, un tamis filtrant, un sachet en tissu non-tissé, un corps d'éponge, un tricot, tissu de mailles ou un tissu, incluant leurs formes mixtes.

3. Réservoir (1) selon la revendication 1, **caractérisé en ce que** ladite pièce moulée (2) est fermée avec un couvercle (8) au niveau de leurs faces frontales.

4. Réservoir (1) selon l'une quelconque des revendications 1 à 3, **caractérisé en ce que** lesdites fibres recouvertes d'argent et/ou lesdits fils recouverts d'argent contiennent du polyester, du polyamide, du polyuréthane et/ou du polypropylène.

5. Réservoir (1) selon l'une quelconque des revendications 1 à 4, **caractérisé en ce que** la teneur en argent desdites fibres recouvertes d'argent et/ou desdits fils recouverts d'argent est de 10 à 20 % en poids, notamment de 12 à 18 % en poids, par exemple 15 % en poids, par rapport aux fibres et/ou fils.

6. Réservoir (1) selon l'une quelconque des revendications 1 à 5, **caractérisé en ce que** l'argent contenu présente une pureté d'au moins 99 % en poids, notamment 99,5 % en poids, par exemple de l'argent élémentaire.

7. Réservoir (1) selon l'une quelconque des revendications 1 à 6, **caractérisé en ce que** la longueur des fibres et/ou des fils est de 100 m à 500 m.

8. Procédé pour laver des textiles ou pour nettoyer de la vaisselle, **caractérisé en ce qu'**un réservoir (1) selon l'une quelconque des revendications 1 à 7 est utilisé.
